(19) Europäisches Patentamt
European Patent Office
Office européen des brevets

(11) EP 3 347 405 B1

(12) EUROPÄISCHE PATENTSCHRIFT

(45) Veröffentlichungstag und Bekanntmachung des Hinweises auf die Patenterteilung:
**09.11.2022 Patentblatt 2022/45**

(21) Anmeldenummer: **16763743.8**

(22) Anmeldetag: **05.09.2016**

(51) Internationale Patentklassifikation (IPC):
***C08G 69/10** (2006.01)* ***C08G 73/10** (2006.01)*
***C11D 3/37** (2006.01)* ***C08G 69/04** (2006.01)*

(52) Gemeinsame Patentklassifikation (CPC):
**C11D 3/3719; C08G 69/04; C08G 69/10; C08G 73/1092**

(86) Internationale Anmeldenummer:
**PCT/EP2016/070793**

(87) Internationale Veröffentlichungsnummer:
**WO 2017/042112 (16.03.2017 Gazette 2017/11)**

(54) **VERFAHREN ZUR HERSTELLUNG VON POLYASPARAGINSÄURE UNTER RÜCKFLUSSKÜHLUNG**

METHOD FOR THE PREPARATION OF POLYASPARTIC ACID UNDER REFLUX

PROCEDE DE FABRICATION D'ACIDES POLYASPARTIQUES PAR CONDENSATEUR A REFLUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2015 EP 15184264**

(43) Veröffentlichungstag der Anmeldung:
**18.07.2018 Patentblatt 2018/29**

(73) Patentinhaber: **BASF SE**
**67056 Ludwigshafen am Rhein (DE)**

(72) Erfinder:
- **TUERKOGLU, Gazi**
  **68163 Mannheim (DE)**
- **DETERING, Jürgen**
  **67117 Limburgerhof (DE)**
- **FEHRINGER, Dietrich**
  **69234 Dielheim (DE)**
- **BENZ, Christian**
  **67549 Worms (DE)**

(74) Vertreter: **BASF IP Association**
**BASF SE**
**G-FLP-C006**
**67056 Ludwigshafen (DE)**

(56) Entgegenhaltungen:
**EP-A1- 0 747 417**
**WO-A1-2015/036325**
**WO-A1-2015/036344**
**US-A- 5 552 517**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 347 405 B1

## Beschreibung

Die vorliegende Erfindung betrifft Verfahren zur Herstellung von Polyasparaginsäure unter Rückflusskühlung .

Die Herstellung von Polyasparaginsäure und ihrer Salze durch säurekatalysierte thermische Polykondensation von Asparaginsäure zu Polyaspartimid und anschließende alkalische Hydrolyse des Polyaspartimids ist prinzipiell bekannt. Als saure Katalysatoren werden beispielsweise Mineralsäuren wie Phosphorsäure, phosphorige Säure, Schwefelsäure und schweflige Säure eingesetzt. Auch organische Säuren wie Methansulfonsäure oder Amidosulfonsäure können verwendet werden. Als besonders geeignet hat sich Phosphorsäure als mittelstarke und nicht oxidativ wirkende Säure erwiesen. Aufgrund ihrer nicht oxidativen Wirkung ist auch die Methansulfonsäure (MSA) ein geeigneter Katalysator. Vorzugsweise dienen die Säuren wie z.B. die Phosphorsäure nicht nur als Katalysator, sondern auch als Lösemittel. Der Vorteil einer gut beherrschbaren Polykondensation, wenn Phosphorsäure Katalysator und Lösemittel zugleich ist, steht der Nachteil einer notwendigen Produktreinigung gegenüber. Die Säure muss durch Auswaschen entfernt werden und sollte aus Kostengründen aufwendig zurückgewonnen werden. Die Alternative bestünde in der Verwendung nur kleiner Mengen an Katalysator. Werden aber nur kleine Mengen des sauren Katalysators (1 bis 25 mol% bezogen auf die eingesetzte Menge an Asparaginsäure) verwendet, so treten während der Kondensation hochviskose bis sehr harte, zur Verbackung neigende Kondensationsphasen auf, die sich in Rührapparaturen oder Knetern nicht mehr rühren oder kneten lassen. Die Folge ist, dass die Kondensation entweder abgebrochen oder zumindest unterbrochen werden muss, um angebackenes festes Polykondensat wieder aufzubrechen und zu zerkleinern. Erst dann kann die Polykondensation fortgeführt werden. So wird in US 5457176 A die thermische Polykondensation von Asparaginsäure mit katalytischen Mengen Phosphorsäure bzw. Methansulfonsäure beschrieben. In beiden Beispielen wird die Polykondensation unterbrochen, das feste Zwischenprodukt aufwendig isoliert und zerkleinert, und das zerkleinerte Zwischenprodukt dem Reaktionsgefäß zur Vervollständigung der Kondensation wieder zugeführt. Ein ähnliches Verfahren ist in DE 4023463 A1 beschrieben, wo Phosphorsäure in der Kondensation von Asparaginsäure als Katalysator eingesetzt wird und das erhaltene Reaktionsprodukt in einer zweiten Stufe mechanisch zerkleinert werden muss.

WO15036344 offenbart ein Verfahren zur Herstellung von Polyasparaginsäuren mit einem gewichtsmittleren Molekulargewicht (Mw) von 6000 bis 15000 g/mol. WO15036325 beschreibt die Verwendung von modifizierten Polyasparaginsäuren in Spülmitteln. EP747417 offenbart Polyasparaginsäuren, die geeignet zur Sequestrierung von Calcium sind. US5552517 offenbart ein Herstellungsverfahren für Polyasparaginsäuren durch thermische Kondensation von Aminosäuren.

Diese daraus zugrundeliegende technische Aufgabe wurde gelöst durch die vorliegende Erfindung wie hierin beschrieben und in den Ansprüchen definiert.

Die vorliegende Erfindung betrifft ein Verfahren zur Herstellung von Polyasparaginsäure, umfassend folgende Schritte:

(a) Kontaktieren einer Mischung aus:

  (i) Asparaginsäure,
  (ii) 1 bis 25 mol% , bevorzugt 2 bis 20 mol%, bevorzugt 3 bis 15 mol%, bevorzugt 3 bis 10 mol%, besonders bevorzugt 3 bis 8 mol% bezogen auf die eingesetzte Menge an Asparaginsäure in mol, eines sauren Katalysators, und
  (iii) Wasser in einem Reaktor;

(b) Erhitzen der Mischung nach (a) unter Rückflusskühlung ohne Abdestillation von Wasser bei einer Reaktionstemperatur von 100 bis 220° C, bevorzugt 120 bis 200° C, bevorzugt 140 bis 200° C, bevorzugt 150 bis 200° C, besonders bevorzugt 160 bis 180° C bis zu einem Umsetzungsgrad der Asparaginsäure von mindestens 1 %, bevorzugt mindestens 3 %, bevorzugt mindestens 5 %, bevorzugt mindestens 7 %, bevorzugt bis zu 15%, besonders bevorzugt bis zu 10 %;
(c) Polykondensation der Reaktionsmasse nach (b) unter gleichzeitiger Abdestillation von Wasser bei 170 bis 250° C, besonders bevorzugt 200 bis 230 ° C;
(d) Hydrolyse der Polykondensate nach (c) unter Zugabe einer Base; und
(e) optional Ansäuern der in (d) erhaltenen Salze der Polyasparaginsäure.

Generell zum Verständnis der vorliegenden Erfindung wird nochmals klargestellt, wie dem Fachmann ohne weiteres ersichtlich, dass eine Kondensation wie hier beschrieben unter Anlegen einer thermischen Energiezufuhr (Erhitzen) erfolgt. So ist bspw. auch in Zusammenschau mit der hier beschriebenen Erfindung klar, dass während Schritt (b) der vorliegenden Erfindung eine Kondensation stattfindet (es wird ein Vorkondensat gebildet), und dass umgekehrt auch die Polykondensation gemäß Schritt (c) der vorliegenden Erfindung unter Erhitzen stattfindet.

Der optionale Schritt (e) des Ansäuerns des Salzes der Polyasparaginsäure im erfindungsgemäßen Verfahren

dient dem Erhalt der Polyasparaginsäure in Säureform und kann in dem Fachmann bekannter Art und Weise und wie hier beispielhaft dargestellt durchgeführt werden. Falls nur das Salz der Polyasparaginsäure gewünscht ist, bspw. als Zwischenstufe, kann auf den Schritt (e) im Zusammenhang mit der vorliegenden Erfindung verzichtet werden. Wenn im Zusammenhang mit der vorliegenden Erfindung von Polyasparaginsäure die Rede ist, werden hierbei entsprechend auch ihre entsprechenden Salze umfasst, wie sie gemäß Schritt (d) des erfindungsgemäßen Herstellverfahrens erhältlich sind bzw. erhalten werden und wie vom Fachmann erkannt. Als mögliche Säuren kommen in diesem Zusammenhang beispielsweise Mineralsäuren oder saure Ionenaustauscher in Betracht. Mineralsäure kann hierbei beispielsweise Schwefelsäure oder Salzsäure sein. Es ist aber auch jede andere Säure möglich, welche für den Fachmann erkennbar zur Ansäuerung des Salzes der Polyasparaginsäure zum Erhalt der entsprechenden Säureform geeignet ist. Die Säureform der Polyasparaginsäure kann aber auch durch Behandlung mit einem sauren Ionenaustauscher wie zum Beispiel Amberlite IR 120 (Hydrogen Form) erhalten werden, in dem man beispielsweise die wässrige Na-Salzlösung (oder Lösung eines entsprechenden anderen Salzes) der Polyasparaginsäure über eine mit dem sauren Ionenaustauscher gepackten Säule fließen lässt.

Dies gilt analog für alle erfindungsgemäßen Verfahren zur Herstellung von Polyasparaginsäure wie hier bereit gestellt und beschrieben.

Sind möglichst helle oder gar farblose Polyasparaginsäuren bzw. deren Salze erwünscht, können die nach dem Schritt (d) erhaltenen Salze der Polyasparaginsäure mit Bleichmitteln wie beispielsweise Hypochlorit, Chlor, Chlordioxid, Wasserstoffperoxid, Peroxysäuren, Ozon oder Perboraten behandelt werden. Optional kann die farbliche Aufhellung auch durch die Behandlung der nach dem Schritt (c) erhaltenen Polykondensate mit den oben genannten Bleichmitteln erfolgen. Es ist zudem auch möglich, den Schritt (d), also die Hydrolyse der Polykondensate nach (c) unter Zugabe einer Base, in Gegenwart der oben genannten Bleichmittel durchzuführen. Als besonders bevorzugtes Bleichmittel ist Wasserstoffperoxid zu nennen. Die exakte Menge an einzusetzendem Bleichmittel richtet sich nach dem erwünschten Grad der Entfärbung. Die farbliche Aufhellung wird bevorzugt mit 0,1 - 20 Gew. %, weiter bevorzugt, 0,5 - 10 Gew. % Bleichmittel bezogen auf die bei der Synthese der Polyasparaginsäure eingesetzte Menge an L-Asparaginsäure durchgeführt.

Wie im Rahmen der vorliegenden Erfindungen überraschend gefunden wurde, kann das Auftreten einer zähen, harten und kaum noch rühr- oder knetbaren Kondensationszwischenphase vermieden werden, wenn Asparaginsäure zunächst thermisch nach Zugabe eines sauren Katalysators bis zu einem Umsetzungsgrad der Asparaginsäure von mindestens 1 %, bevorzugt mindestens 3 %, bevorzugt mindestens 5 %, bevorzugt mindestens 7 %, bevorzugt bis zu 10%, unter Rückflusskühlung ohne Abdestillation von Wasser vorkondensiert wird (vgl. Schritt (b) der Erfindung). Es entsteht ein Vorkondensat, das in großen Teilen noch nicht umgesetzte Asparaginsäure und Wasser enthält. Das Vorkondensat wird anschließend unter Abdestillation von Wasser weiter kondensiert, bis das gewünschte Polykondensat vorliegt (vgl. Schritt (c) der vorliegenden Erfindung). Hierbei wurde im Rahmen der vorliegenden Erfindung herausgefunden, dass sich bei der erfindungsgemäß durchgeführten Rückflusskühlung gemäß Schritt (b) über einen längeren Zeitraum nach 180 min ein maximaler Umsetzungsgrad der Asparaginsäure von etwa 10 % eingestellt hat. Dieser maximale Umsetzungsgrad der Asparaginsäure, ab welchem dann gemäß der erfindungsgemäßen Lehre die Rückflussphase (b) beendet und Wasser abdestilliert wird (Schritt (c)), ließ sich nicht allein durch eine verlängerte Dauer der Rückflusskühlung von bis zu 180 min erhöhen, wobei nicht ausgeschlossen werden soll, dass der Umsetzungsgrad der Asparaginsäure, der nach Schritt (b) des erfindungsgemäßen Verfahrens erreicht wird, prinzipiell nicht auch über 10 % liegen kann, beispielsweise bei 15 %. Insbesondere soll ein maximaler Umsetzungsgrad der Asparaginsäure nach Schritt (b) des erfindungsgemäßen Verfahrens nicht dahingehend verstanden werden, dass die Vorteile der vorliegenden Erfindung nicht auch bei höheren Umsetzungsgraden erzielt werden könnten. Es ist denkbar, dass während Schritt (b) der vorliegenden Erfindung auch ein höherer Umsetzungsgrad der Asparaginsäure erzielt werden kann, bspw. durch noch längere Dauer von Schritt (b). Ein maximaler Umsetzungsgrad der Asparaginsäure kann aber aus ökonomischer Sicht sinnvoll sein, bspw. um lange Zeiträume der Rückflusskühlung gemäß Schritt (b) der vorliegenden Erfindung zu vermeiden, während dessen der Umsetzungsgrad nur relativ langsam steigt. So kann der maximale Umsetzungsgrad n der Asparaginsäure nach Schritt (b) des erfindungsgemäßen Verfahrens bspw. auch 15 %, bevorzugt 10 % betragen, wobei die Rückflusskühlung gemäß Schritt (b) bspw. 20 min, 90 min, 120 min, 150 min, 180 min oder länger andauern kann wie hier auch in den Beispielen gezeigt. Der Umsetzungsgrad der Asparaginsäure wird anschließend, während der Polykondensation unter Destillation in Schritt (c) des erfindungsgemäßen Verfahrens, in relativ kurzer Zeit erhöht und kann bereits 1 Stunde nach Beginn von Schritt (c) 50 oder 60 % betragen, wie auch hier beschrieben und in den Beispielen gezeigt. Ohne an eine Theorie gebunden zu sein, wird vermutet, dass der Reaktionsfortschritt in der Rückflussphase nicht über eine bestimmte Oligomerbildung hinausgeht und die Triebkraft für eine weitere Umsetzung der Asparaginsäure die Destillation von Wasser ist.

Entscheidender als die Dauer der Rückflusskühlung nach Schritt (b) des hier beschriebenen Verfahrens ist daher im Zusammenhang mit der vorliegenden Erfindung der während dieser Rückflusskühlung erreichte Umsetzungsgrad der Asparaginsäure, ab welchem die Polykondensation unter Abdestillierung von Wasser gemäß Schritt (c) beginnt. Der minimale Umsetzungsgrad der Asparaginsäure, ab welchem mit Schritt (c) begonnen wird, beträgt im Zusammenhang mit der vorliegenden Erfindung 1 %. Der minimale Umsetzungsgrad kann aber auch höher liegen, bspw. bei 3 %, 5 %, oder 7 %. Das Maximum des Umsetzungsgrades der Asparaginsäure während der Rückflusskühlung liegt im Allgemeinen nicht über 10 % bis 15 %, was sich durch eine bloße verlängerte Rückflusskühlung nicht weiter erhöhen lässt wie hier beschrieben Das Maximum des Umsetzungsgrades der Asparaginsäure, welcher nach Schritt (b) des erfindungsgemäßen Verfahrens erreicht wird und ab welchem mit Schritt (c) weiter polykondensiert wird, kann daher in einer Ausführungsform bspw. 10 %, in einer anderen Ausführungsform bspw. 15 % sein, wobei auch höhere Umsetzungsgrade einer Umsetzbarkeit und Nutzbarkeit der vorliegenden Erfindung nicht generell im Wege stehen.

Die erfindungsgemäß hergestellten Polyasparaginsäuren finden Anwendung in bspw. Reinigungs-, Wasch- und Spülmittelzusammensetzungen, insbesondere, aber nicht ausschließlich, in Geschirrspülmitteln für die automatische Geschirrreinigung. Ein weiterer Vorteil der erfindungsgemäß hergestellten Polyasparaginsäure liegt darin, dass sie im Gegensatz zu anderen Polymeren, welche in derartigen Zusammensetzungen eingesetzt werden und durch radikalische Polymerisation aus carboxylhaltigen Monomeren hergestellt wurden, unter aeroben Bedingungen biologisch abbaubar sind.

Bei der in den erfindungsgemäßen Herstellverfahren eingesetzten Asparaginsäure kann es sich sowohl um L- als auch D- und DL-Asparaginsäure handeln. Bevorzugt wird L-Asparaginsäure eingesetzt.

Die Temperatur nach Zugabe des sauren Katalysators bei Schritt (b) des erfindungsgemäßen Verfahrens beträgt 100 bis 220° C, bevorzugt 120 bis 200° C, bevorzugt 140 bis 200° C, bevorzugt 150 bis 200° C, und besonders bevorzugt 160 bis 180 ° C. Die Temperaturen beziehen sich im Rahmen der vorliegenden Erfindung auf die Reaktionstemperaturen, sofern nichts anderes angegeben. Die Temperaturangaben beziehen sich dabei auf einen Druck von 1 bar, wobei es dem Fachmann klar ist, dass bei entsprechender Erhöhung oder Erniedrigung des Drucks auch entsprechend niedrigere bzw. höhere Temperaturen angelegt werden können. Während Schritt (b) des erfindungsgemäßen Verfahrens wird unter Rückflusskühlung ohne Abdestillation von Wasser kondensiert (erhitzt). Dieser Schritt erfolgt erfindungsgemäß bis zu einem Umsetzungsgrad der Asparaginsäure von mind. 1 %, bevorzugt 3 %, 5 %, oder 7 %.

Der Umsetzungsgrad kann dabei beispielsweise durch quantitative Bestimmung nicht umgesetzter monomerer Asparaginsäure ermittelt werden. Hierzu wird eine definierte Menge des nach dem Schritt (b) erhaltenen Reaktionsgemisches mit 1 N Salzsäure extrahiert, wodurch nicht umgesetzte monomere Asparaginsäure unter Bildung von Asparaginsäurehydrochlorid in Lösung gebracht wird. Durch flüssigchromatographische quantitative Bestimmung des Asparaginsäuregehaltes Y [g] des Extraktes lässt sich der Umsetzungsgrad U im Zusammenhang mit der vorliegenden Erfindung berechnen durch

$$U = (X - Y) / X$$

wobei X [g] der Asparaginsäuregehalt der definierten Menge der Reaktionsmischung vor Beginn des Schrittes (b) ist.

Als saure Katalysatoren, welcher in Schritt (a) des erfindungsgemäßen Verfahrens eingesetzt wird, kommen beispielsweise anorganische Säuren des Phosphors und Schwefels wie Phosphorsäure, Phosphorige Säure, Hypophosphorige Säure, Schwefelsäure oder Schweflige Säure, organische Säuren wie Methansulfonsäure Amidosulfonsäure, p-Toluolsulfonsäure oder Isethionsäure, sowie Halogenwasserstoffe wie Salzsäure in Betracht. Die vorgenannten Säuren können hierfür auch in Form ihrer sauren Salze eingesetzt werden. In einer Ausführungsform handelt es sich bei dem erfindungsgemäß einzusetzenden sauren Katalysator um Methansulfonsäure (MSA). Methansulfonsäure kann im Zusammenhang mit der vorliegenden Erfindung auch in Form ihrer Salze eingesetzt werden. Salze der Methansulfonsäure sind beispielsweise durch partielle oder vollständige Neutralisation von Methansulfonsäure mit Alkali- oder Erdalkalimetallhydroxiden, Ammoniumhydroxid, primären, sekundären oder tertiären aliphatischen Aminen oder heterocyclischen aromatischen Aminen wie Pyridin, Imidazol oder 1-Methylimidazol erhältlich. Die sekundären oder tertiären aliphatischen Amine können dabei auch in cyclischer Form vorliegen wie z.B. Piperidin. Die im Schritt (a) der erfindungsgemäßen Herstellverfahren eingesetzte Menge an saurem Katalysator (bspw. MSA) bezieht sich, sofern nicht anders angegeben, auf die in Schritt (a) eingesetzte Menge an Asparaginsäure. Erfindungsgemäß werden 1 bis 25 mol% an saurem Katalysator eingesetzt. Das heißt, dass wenn beispielsweise 10 mol Asparaginsäure in den erfindungsgemäßen Verfahren eingesetzt werden, werden 0,1 bis 2,5 mol saurer Katalysator eingesetzt. Bevorzugt werden 2 bis 20 mol%, bevorzugt 3 bis 15 mol% , bevorzugt 3 bis 10 mol%, und besonders bevorzugt 3 bis 8 mol% saurer Katalysator eingesetzt, jeweils bezogen auf die eingesetzte Menge Asparaginsäure (in mol).

Die Dosierung des sauren Katalysators (bspw. Methansulfonsäure) kann bevorzugt in einer Portion zu Beginn des Schrittes (a) des erfindungsgemäßen Verfahrens erfolgen. Die hier beschriebenen Mengen an Katalysator (bspw. Methansulfonsäure MSA) von 1 bis 25 mol%, bevorzugt 2 bis 20 mol%, bevorzugt 3 bis 15 mol% , bevorzugt 3 bis 10 mol%, und besonders bevorzugt 3 bis 8 mol% werden dabei erfindungsgemäß während Schritt (a) eingesetzt. Dabei ist es möglich, diese Menge an Katalysator auf einmal zuzugeben (zu Beginn, am Ende oder mittig während Schritt (a)), oder kontinuierlich oder stufenweise während Schritt (a) in einzelnen Dosen. Darüber hinaus ist es auch möglich, noch während der folgenden Schritte (b) und/oder (c) des erfindungsgemäßen Verfahrens weiteren Katalysator zuzugeben,

wobei auch ein anderer Katalysator als der in Schritt (a) eingesetzte verwendet werden kann.

In Schritt (a) des erfindungsgemäßen Verfahrens wird auch noch zusätzlich Wasser eingesetzt, um den eingesetzten sauren Katalysator gleichmäßiger zu verteilen. Das zusätzliche Wasser kann sowohl getrennt vom sauren Katalysator als auch als Mischung mit dem sauren Katalysator (bspw. bei Einsatz des Katalysators als wässrige Lösung) eingesetzt werden.

Die Temperatur bei der Polykondensation während Schritt (c) der erfindungsgemäßen Herstellverfahren liegt bei 170 bis 250° C, bevorzugt bei 180 bis 250° C, weiter bevorzugt bei 200 bis 250° C, besonders bevorzugt bei 200 bis 230° C. Die im Zusammenhang mit der vorliegenden Erfindung angegebenen Temperaturen beziehen sich, sofern hier nicht anders angegeben, auf die jeweilige Reaktionstemperatur bei 1 bar Reaktionsdruck. Wie dem Fachmann klar ersichtlich, können bei entsprechender Erhöhung oder Erniedrigung des Drucks auch niedrigere bzw. höhere Temperaturen angelegt werden. Die Polykondensation wird idealerweise bis zur vollständigen Umsetzung der Reaktionspartner zu Polykondensaten gem. Schritt (c) der erfindungsgemäßen Herstellverfahren durchgeführt, beispielsweise für einen Zeitraum von 1 Minute bis zu 50 Stunden. Vollständige Umsetzung bedeutet im Rahmen der vorliegenden Erfindung, dass die Restmenge an nicht umgesetzter Asparaginsäure $\leq$ 0,5 Gew% bezogen auf die eingesetzte Menge an Asparaginsäure beträgt. Die Polykondensation (das Tempern) wird erfindungsgemäß beispielsweise und vorzugsweise im Vakuum oder unter Inertgasatmosphäre (z.B. $N_2$ oder Argon) durchgeführt. Die Polykondensation kann aber auch unter erhöhtem Druck oder in einem Gasstrom, z.B. Kohlendioxid, Luft, Sauerstoff oder Wasserdampf erfolgen. Je nach den gewählten Reaktionsbedingungen liegen die Reaktionszeiten für die Kondensation im Allgemeinen zwischen 1 Minute und 50 Stunden

Zur Durchführung der Polykondensation eignen sich alle dem Fachmann auf diesem Gebiet bekannten kontinuierlich oder absatzweise (batch-weise) betreibbaren Reaktoren und Apparaturen wie beispielsweise Heizbänder, Kneter, Mischer, Schaufeltrockner, Zähphasentrockner, Hochviskosreaktoren, Extruder, Drehrohröfen und andere beheizbare Vorrichtungen, in denen die Kondensation von Feststoffen unter Entfernung von Reaktionswasser durchgeführt werden kann. In Betracht kommen beispielsweise auch kontinuierlich oder absatzweise (batch-weise) arbeitende Apparaturen mit ein oder mehreren Wellen zur Durchmischung oder Durchmischung und Selbstreinigung. Derartige Apparate werden beispielsweise von der Firma LIST AG, Arisdorf, Schweiz unter dem Handelsnamen Discotherm® B, ORP (Opposite Rotating Processor) oder CRP (Co-Rotating Processor) oder von der Firma Buss-SMS-Canzler unter dem Handelsnamen Reactotherm® angeboten. Für die Kondensation eignen sich beispielsweise auch konvektive Apparaturen wie Wirbelschichtreaktoren. Polykondensate mit niedrigem Molekulargewicht können in auch druckdicht verschlossenen Gefäßen hergestellt werden, indem das entstehende Reaktionswasser nicht oder nur teilweise entfernt wird. Die Polykondensation kann grundsätzlich auch in Apparaturen erfolgen, die direkt beheizt sind, z.B. durch elektrische Beheizung, Dampf, Wälzgas, Thermalöl oder Salzbäder. Die Polykondensation kann auch in Apparaturen erfolgen, bei denen die notwendige thermische Energie hauptsächlich durch Strahlung definierter Frequenz (z.B. Infrarot, Hochfrequenz, Mikrowelle) zugeführt wird.

Bei der thermischen Polykondensation von Asparaginsäure mit saurem Katalysator (bspw. Methansulfonsäure) fällt das Polykondensat im Allgemeinen in Form der wasserunlöslichen Polyaspartimide an. Die eingesetzten kleinen Mengen an saurem Katalysator können dabei im Produkt verbleiben, ohne dass Nachteile in der Anwendbarkeit entstehen. Falls es jedoch erwünscht ist, können die Polykondensate der Asparaginsäure von dem sauren Katalysator beispielsweise dadurch gereinigt werden, in dem das wasserunlösliche Polyaspartimid zerkleinert und mit Wasser bei Temperaturen von 10° C bis 100° C extrahiert wird. Dabei wird der eingesetzte saure Katalysator ausgewaschen. Nicht umgesetzte Asparaginsäure lässt sich durch Extraktion mit 1N Salzsäure leicht herauslösen.

Nach der Polykondensation gemäß Schritt (c) des erfindungsgemäßen Verfahrens wird das erhaltene Polykondensat unter Zugabe einer Base hydrolysiert. Die hier erfindungsgemäß einzusetzende Base kann im Prinzip jede für den Fachmann geeignete Base sein. Solche Basen umfassen unter anderem Alkali- und Erdalkalimetallbasen wie Natronlauge, Kalilauge, Calciumhydroxid oder Bariumhydroxid; Carbonate wie Soda und Kaliumcarbonat; Ammoniak und primäre, sekundäre oder tertiäre Amine; andere Basen mit primären, sekundären oder tertiären Aminogruppen. In einer Ausführungsform der vorliegenden Erfindung ist die in Schritt (d) des erfindungsgemäßen Verfahrens eingesetzte Base ausgewählt aus der Gruppe bestehend aus Natronlauge, Kalilauge, Calciumhydroxid, Bariumhydroxid, Soda, Kaliumcarbonat, Ammoniak und Ammoniumhydroxid. Bevorzugt ist im Zusammenhang mit der vorliegenden Erfindung sind Natronlauge oder Ammoniumhydroxid.

Die Polyasparaginsäuren (bzw. deren Salze wie oben beschrieben) werden aus den Polykondensaten gemäß Schritt (c) vorzugsweise dadurch erhalten, dass man die Polykondensate in Wasser aufschlämmt und bei Temperaturen vorzugsweise im Bereich von 0° C bis 90° C unter Zugabe einer hier beschriebenen geeigneten Base hydrolysiert und neutralisiert. Die Hydrolyse und Neutralisation findet vorzugsweise bei pH-Werten von 8 bis 10 statt. Vorteilhaft im Sinne der Erfindung ist es auch, die Kondensation und die Hydrolyse apparativ miteinander zu koppeln, indem man bspw. die Hydrolyse im selben Gefäß/Reaktor/Apparat durchführt wie die vorhergehende Kondensation. Anschließend können die so erhaltenen Salze der Polyasparaginsäure noch angesäuert werden, um die entsprechende Säureform zu erhalten wie hierin beschrieben.

Die erfindungsgemäß hergestellten/herstellbaren Polyasparaginsäuren bzw. ihre Salze können als wässrige Lösung oder in fester Form, z.B. in Pulver- oder Granulatform verwendet werden. Wie dem Fachmann bekannt ist, kann man die Pulver- oder Granulatform beispielsweise durch Sprühtrocknung, Sprühgranulierung, Wirbelschicht-Sprü hgranulierung, Strahlschichtgranulierung, Walzentrockung oder Gefriertrocknung der wässrigen Lösung der Polyasparaginsäuren bzw. ihren Salzen erhalten.

Die erfindungsgemäß herzustellende Polyasparaginsäure kann unterschiedliche gewichtsmittlere Molekulargewichte haben, bevorzugt 6.000 bis 30.000 g/mol. Das gewichtsmittlere Molekulargewicht kann dabei eingestellt werden in Abhängigkeit von der Menge des eingesetzten sauren Katalysators in Schritt (a) der erfindungsgemäßen Herstellverfahren, sowie von der angelegten Temperatur während der Polykondensation in Schritt (c). Hierbei liegt das Temperaturoptimum zum Erhalt von Polyasparaginsäuren mit gewichtsmittlerem Molekulargewicht von 6.000 bis 30.000 g/mol zwischen 200° C und 230 ° C. Niedrigere oder höhere Temperaturen haben auch beim Einsatz größerer Mengen an Katalysator (z. B. > 25 mol% Methansulfonsäure) niedrigere gewichtsmittlere Molekulargewichte und/oder eine geringere Produktausbeute zur Folge. Bei höheren Temperaturen besteht außerdem die Gefahr einer zunehmenden thermischen Zersetzung des sauren Katalysators mit negativen Auswirkungen auf Ausbeute, Umsetzungsgrad und Molekulargewichsteinstellung. Der Einsatz zu großer Mengen an saurem Katalysator hat zudem den generellen Nachteil, dass dann relevante Mengen an saurem Katalysator im Produkt verbleiben, welche wiederum die Anwendbarkeit des Produkts einschränken können.

Die im Zusammenhang mit der vorliegenden Erfindung angegebenen Molekularmassen Mw können unter anderem mit Hilfe einer Kalibrierkurve, die mit eng verteilten Natriumpolyacrylat-Standards der Fa. Polymer Standard Service mit Molekulargewichten von M = 1.250 g/mol bis M = 130.500 g/mol erstellt werden kann, berechnet werden, wie dem Fachmann bekannt und hier beschrieben ist. Für die Kalibrierung können unter anderem zusätzlich Na-Acrylat mit einem Molekulargewicht von M = 96 und ein PEG-Standard mit M = 620, der mit Na-PAA M = 150 gleichgesetzt wird, benutzt werden.

Bei den hier bereitgestellten und beschriebenen erfindungsgemäßen Verfahren zur Herstellung von Polyasparaginsäure ist es im Rahmen der Erfindung auch möglich, in Schritt (a) neben dem genannten sauren Katalysator (bspw. MSA) auch noch zusätzliche Säuren mit einzubringen. Beispielsweise kann hier zusätzlich eine Carbonsäure (Monocarbonsäure oder Polycarbonsäure), eine Hydroxycarbonsäure und/oder eine Aminosäure (außer Asparaginsäure) eingesetzt werden. Solche Carbonsäuren oder Hydroxycarbonsäuren sind bevorzugt mehrbasisch. In diesem Zusammenhang können also bei der erfindungsgemäßen Herstellung der Polyasparaginsäure im Schritt (a) zusätzlich zum genannten und hier beschriebenen sauren Katalysator mehrbasische Carbonsäuren und ihre Anhydride eingesetzt werden, z.B. Oxalsäure, Adipinsäure, Fumarsäure, Maleinsäure, Maleinsäureanhydrid, Itaconsäure, Aconitsäure, Bernsteinsäure, Bernsteinsäureanhydrid, Malonsäure, Korksäure, Azelainsäure, Diglykolsäure, Glutarsäure, $C_1$-$C_{26}$ Alkylbernsteinsäuren (z.B. Octylbernsteinsäure), $C_2$-$C_{26}$ Alkenylbernsteinsäuren (z.B. Octenyl bernsteinsäure), 1,2,3-Propantricarbonsäure, 1,1,3,3-Propantetracarbonsäure, 1,1,2,2-Ethantetracarbonsäure, 1,2,3,4-Butantetracarbonsäure, 1,2,2,3-Propantetracarbonsäure, 1,3,3,5-Pentantetracarbonsäure Trimellitsäure oder Trimellitsäureanhydrid. Ferner können in diesem Zusammenhang mehrbasische Hydroxycarbonsäuren eingesetzt werden, z.B. Citronensäure, Isocitronensäure, Schleimsäure, Weinsäure, Tartronsäure, oder Äpfelsäure. Als Aminosäuren können in diesem Zusammenhang unter anderem Aminocarbonsäuren (z.B. Glutaminsäure, Cystein), basische Diaminocarbonsäuren (z.B. Lysin, Arginin, Histidin, Aminocaprlactam), neutrale Aminosäuren (z.B. Glycin, Alanin, Valin, Leucin, Isoleucin, Methionin, Cystein, Norleucin, Caprolactam, Asparagin, Isoasparagin, Glutamin, Isoglutamin), Aminosulfonsäuren (z.B. Taurin), Hydroxylaminosäuren (z.B. Hydroxyprolin, Serin, Threonin), Iminocarbonsäuren (z.B. Prolin, Iminodiessigsäure), oder aromatische und heterocyclische Aminosäuren (z.B. Anthranilsäure, Tryptophan, Tyrosin, Histidin) eingesetzt werden, aber nicht Asparaginsäure. Bevorzugte carboxylhaltige Verbindungen (ii) im Zusammenhang mit der Herstellung der erfindungsgemäß einzusetzenden modifizierten Polyasparaginsäuren sind 1,2,3,4-Butantetracarbonsäure, Zitronensäure, Glycin, Glutaminsäure, Itaconsäure, Bernsteinsäure, Taurin, Maleinsäure und Glutarsäure, besonders bevorzugt 1,2,3,4-Butantetracarbonsäure, Zitronensäure, Glycin und Glutaminsäure.

Die erfindungsgemäß herstellbaren Polyasparaginsäuren zeichnen sich unter anderem durch ihre sehr gute belagsinhibierende und dispergierende Wirkung aus, und zwar sowohl gegenüber anorganischen als auch organischen Belägen. Insbesondere inhibieren sie Beläge aus Calcium- und Magnesiumcarbonat und Calcium- und Magnesiumphosphaten und -phosphonaten. Zusätzlich verhindern sie Ablagerungen, die aus den Schmutzbestandteilen einer Spülflotte stammen, wie Fett-, Eiweiß- und Stärkebeläge. Die im folgenden Beschreibungsteil offenbarten Verwendungsmöglichkeiten sind explizit nicht Teil der vom Anspruch umfassten Erfindung.

Die mittels der vorliegenden Erfindung herstellbaren Polyasparaginsäuren können daher auch als Belagsinhibitoren oder Dispergiermitteln Verwendung finden. Die Polyasparaginsäuren können dabei sowohl als Zusatzstoff in Reinigungs-, Spülmittel-(insbesondere maschinelle Geschirrspülmittel-) oder Waschmitteln, als auch als Belagsinhibitoren oder Dispergiermittel in wasserführenden Systemen verwendet werden wie hier dargestellt und beschrieben.

Zusammensetzungen - insbesondere Reinigungsmittel-, Spülmittel- und Waschmittelzusammensetzungen -, welche Polyasparaginsäuren enthalten, die durch das erfindungsgemäße Verfahren herstellbar bzw. erhältlich sind, sind

insbesondere Spülmittelzusammensetzungen für maschinelles Geschirrspülen, welche die Polyasparaginsäuren wie hier beschrieben enthalten. Solche Zusammensetzungen enthalten neben den Polyasparaginsäuren weitere Bestandteile wie bspw. Lösemittel, Tenside oder Komplexbildner. Die Polyasparaginsäuren hergestellt nach der Erfindung können nach dem Fachmann bekannten Verfahren direkt in die Formulierungen (Gemische) in ihren verschiedenen Darreichungsformen eingearbeitet werden. Hierbei sind beispielsweise feste Formulierungen wie Pulver, Tabletten, gelartige und flüssige Formulierungen zu nennen. Die maschinellen Geschirrspülmittel-zusammensetzungen und die anderen Reinigungsmittel-, Spülmittel- und Waschmittel-zusammensetzungen enthaltend erfindungsgemäß hergestellte Polyasparaginsäuren können in flüssige, gelartiger oder fester Form, ein- oder mehrphasig, als Tabletten oder in Form anderer Dosiereinheiten, verpackt oder unverpackt bereitgestellt werden. Die erfindungsgemäß herstellbaren Polyasparaginsäuren können in diesem Zusammenhang sowohl in mehrkomponentigen Produktsystemen (getrennter Einsatz von Reiniger, Klarspüler und Regeneriersalz), als auch in solchen Geschirrspülmitteln eingesetzt werden, in denen die Funktionen von Reiniger, Klarspülmittel und Regeneriersalz in einem Produkt vereinigt sind (bspw. 3-in-1-Produkte, 6-in-1-Produkte, 9-in-1-Produkte, all-in-one Produkte).

Zusammensetzungen umfassend die nach dem erfindungsgemäßen Verfahren herstellbare bzw. hergestellte Polyasparaginsäure sind daher herstellbar. In einer Möglichkeit kann es sich hierbei um Spülmittelzusammensetzungen, insbesondere solche, welche für das maschinelle Geschirrspülen (ADW) geeignet sind, handeln.

Herstellbare Spülmittelzusammensetzungen umfassen beispielsweise

(a) 1-20 Gew%, bevorzugt 1-15 Gew%, besonders bevorzugt 2-12 Gew% der hier beschriebenen und erfindungsgemäß hergestellten bzw. herstellbaren Polyasparaginsäure;
(b) 0-50 Gew% Komplexbildner;
(c) 0,1-80 Gew% Builder und/oder Co-Builder;
(d) 0,1-20 Gew% nichtionische Tenside;
(e) 0-30 Gew% Bleichmittel, Bleichaktivatoren und Bleichkatalysatoren;
(f) 0-8 Gew% Enzyme; und
(g) 0-50 Gew% Zusatzstoffe.

Als Komplexbildner (b) können beispielsweise eingesetzt werden: Nitrilotriessigsäure, Ethylendiamintetraessigsäure, Diethylentriaminpentaessigsäure, Hydroxyethylethylendiamintriessigsäure, Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure, sowie jeweils deren Salze. Bevorzugte Komplexbildner (b) sind Methylglycindiessigsäure und Glutaminsäurediessigsäure und deren Salze. Besonders bevorzugte Komplexbildner (b) sind Methylglycindiessigsäure und deren Salze, insbesondere deren Mono-, Di- und Tri-Natrium-, Kalium-, Lithium- und Ammoniumsalze. Die Salze der Methylglycindiessigsäure können als Racemat vorliegen, d.h. D- und L-Enantiomere liegen in äquimolarer Mischung vor oder ein Enantiomer, z.B. das L-Enantiomer, kann im Überschuss vorliegen. Bevorzugt sind 3 bis 50 Gew% Komplexbildner (b).

Als Builder und/oder Co-Builder (c) können insbesondere wasserlösliche oder wasserunlösliche Substanzen, deren Hauptaufgabe im Binden von Calcium- und Magnesiumionen besteht, eingesetzt werden. Dies können niedermolekulare Carbonsäuren sowie deren Salze wie Alkalicitrate sein, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und $\alpha$-Hydroxypropionsäure.

Eine weitere Substanzklasse mit Cobuildereigenschaften, welche in den hier genannten Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Unter anderem können als Builder Silikate eingesetzt werden. Enthalten sein können kristalline schichtförmige Silikate mit der allgemeinen Formel $NaMSi_xO_{2x+1}\ yH_2O$, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem $SO_2$ : $Na_2O$-Verhältnis von 1 bis

3,5, vorzugsweise von 1,6 bis 3 und insbesondere von 2 bis 2,8 zum Einsatz kommen.

Weiterhin können als Builder und/oder Co-Builder (c) im Zusammenhang mit der hier genannten Spülmittelzusammensetzung Carbonate und Hydrogencarbonate eingesetzt werden, unter welchen die Alkalisalze, insbesondere Natriumsalze, bevorzugt werden. Weiterhin können als Cobuilder Homo- und Copolymere der Acrylsäure oder der Methacrylsäure eingesetzt werden, die bevorzugt eine gewichtsmittlere Molmasse von 2.000 bis 50.000 g/mol aufweisen. Als Comonomere eignen sich insbesondere monoethylenisch ungesättigte Dicarbonsäuren wie Maleinsäure, Fumarsäure und Itaconsäure sowie deren Anhydride wie Maleinsäureanhydrid. Es eignen sich auch Sulfonsäuregruppen haltige Comonomere wie 2-Acrylamido-2-methylpropansulfonsäure, Allylsulfonsäure und Methansulfonsäure. Auch hydrophobe Comonomere sind geeignet wie beispielsweise Isobuten, Diisobuten, Styrol, alpha-Olefine mit 10 oder mehr Kohlenstoffatomen. Hydrophile Monomere mit Hydroxyfunktion oder Alkylenoxidgruppen können ebenfalls als Comonomere verwendet werden. Beispielsweise seien genannt: Allylalkohol und Isoprenol sowie deren Alkoxylate und Methoxypolyethylenglykol(meth)acrylat.

Bevorzugte Mengen sind für Builder und/oder Co-Builder im Zusammenhang mit der hier genannten Spülmittelzusammensetzung 5 bis 80 Gew%, besonders bevorzugt 10 bis 75 Gew%, 15 bis 70 Gew% oder 15 bis 65 Gew%.

Als nichtionische Tenside (d) im Zusamenhang mit der hier genannten Spülmittelzusammensetzung können beispielsweise schwach oder niedrig schäumende nichtionische Tenside eingesetzt werden. Diese können in Anteilen von 0,1 bis 20 Gew%, bevorzugt von 0,1 bis 15 Gew%, besonders bevorzugt von 0,25 bis 10 Gew% oder 0,5 bis 10 Gew% vorliegen. Geeignete nichtionische Tenside umfassen unter anderem Tenside der allgemeinen Formel (I)

$$R^1\text{-O-}(CH_2CH_2O)_a\text{-}(CHR^2CH_2O)_b\text{-}R^3 \qquad \text{(I)},$$

worin $R^1$ ein linearer oder verzweigter Alkylrest mit 8 bis 22 C-Atomen ist,
$R^2$ und $R^3$ unabhängig voneinander Wasserstoff oder ein linearer oder verzweigter Alkylrest mit 1 bis 10 C-Atomen oder H sind, wobei $R^2$ bevorzugt Methyl ist, und a und b unabhängig voneinander 0 bis 300 sind. Bevorzugt ist a = 1 - 100 und b = 0 - 30.

Auch geeignet sind Tenside der Formel (II)

$$R^4\text{-O-}[CH_2CH(CH_3)O]_cCH_2CH_2O]_d[CH_2CH(CH_3)O]_eCH_2CH(OH)R^5 \qquad \text{(II)},$$

worin $R^4$ für einen linearen oder verzweigten aliphatischen Kohlenwasserstoffrest mit 4 bis 22 Kohlenstoffatomen oder Mischungen hieraus steht,
$R^5$ einen linearen oder verzweigten Kohlenwasserstoffrest mit 2 bis 26 Kohlenstoffatomen oder Mischungen hieraus bezeichnet,
c und e für Werte zwischen 0 und 40 steht, und
d für einen Wert von mindestens 15 steht.

Auch geeignet i sind Tenside der Formel (III)

$$R^6O\text{-}(CH_2CHR^7O)_f(CH_2CH_2O)_g(CH_2CHR^8O)_h\text{-CO-}R^9 \qquad \text{(III)},$$

worin $R^6$ ein verzweigter oder unverzweigter Alkylrest mit 8 bis 16 Kohlenstoffatomen ist, $R^7$, $R^8$ unabhängig voneinander H oder ein verzweigter oder unverzweigter Alkylrest mit 1 bis 5 Kohlenstoffatomen sind,
$R^9$ ein unverzweigter Alkylrest mit 5 bis 17 Kohlenstoffatomen ist,
f, h unabhängig voneinander eine Zahl von 1 bi 5 sind, und
g eine Zahl von 13 bis 35 ist.

Die Tenside der Formeln (I), (II) und (III) können sowohl statistische Copolymere als auch Block-Copolymere sein, bevorzugt sind sie als Block-Copolymere.

Weiterhin können Di- und Multi-blockcopolymerisate, aufgebaut aus Ethylenoxid und Propylenoxid, eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside sind in EP-A 851 023 sowie in DE-A 198 19 187 offenbart.

Es können auch Gemische mehrerer verschiedener nichtionischer Tenside enthalten sein. Die Spülmittelzusammensetzungen können weiterhin anionische oder zwitterionische Tenside enthalten, bevorzugt in Mischung mit nichtionischen Tensiden. Geeignete anionische und zwitterionischer Tenside sind ebenfalls in EP-A 851 023 sowie DE-A 198 19 187 genannt.

Als Bleichmittel und Bleichaktivatoren (e) können im Zusammenhang mit den Spülmittelzusammensetzungen dem Fachmann bekannte Vertreter eingesetzt werden. Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat. Ebenfalls als Sauerstoffbleichmittel einsetzbar sind Persulfate und Wasserstoffperoxid. Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure. Außerdem können auch folgende Sauerstoffbleichmittel in der Spülmittelzusammensetzung Verwendung finden: Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind. Sauerstoffbleichmittel können in Mengen von im Allgemeinen 0,1 bis 30 Gew%, bevorzugt von 1 bis 20 Gew%, besonders bevorzugt von 3 bis 15 Gew%, bezogen auf die gesamte Spülmittelzusammensetzung, eingesetzt werden.

Chlorhaltige Bleichmittel sowie die Kombination von chlorhaltigen Bleichmittel mit peroxidhaltigen Bleichmitteln können im Zusammenhang mit den Spülmittelzusammensetzungen ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N '-Dichlorbenzoylharnstoff, p-Toluolsulfondichloroamid oder Trichlorethylamin. Bevorzugte chlorhaltige Bleichmittel sind hierbei Natriumhypochlorit, Calciumhypochlorit, Kaliumhypochlorit, Magnesiumhypochlorit, Kaliumdichloroisocyanurat oder Natriumdichloroisocyanurat. Chlorhaltige Bleichmittel können in diesem Zusammenhang in Mengen von 0,1 bis 30 Gew%, bevorzugt von 0,1 bis 20 Gew%, bevorzugt von 0,2 bis 10 Gew%, besonders bevorzugt von 0,3 bis 8 Gew%, bezogen auf die gesamte Spülmittelzusammensetzung, eingesetzt werden.

Weiterhin können in geringen Mengen Bleichmittelstabilisatoren wie beispielsweise Phosphonate, Borate, Metaborate, Metasilikate oder Magnesiumsalze zugegeben werden. Bleichaktivatoren können Verbindungen sein, welche unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind hierbei unter anderem Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze). Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA, und TMAQ. Bleichaktivatoren können im Zusammenhang in Mengen von 0,1 bis 30 Gew%, bevorzugt von 0,1 bis 10 Gew%, bevorzugt von 1 bis 9 Gew%, besonders bevorzugt von 1,5 bis 8 Gew%, bezogen auf die gesamte Spülmittelzusammensetzung eingesetzt werden. Zusätzlich zu den konventionellen Bleichaktivatoren oder an deren Stelle können auch sogenannte Bleichkatalysatoren in Klarspülerpartikel eingearbeitet werden. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Komplexe mit stickstoffhaltigen Tripod-Liganden sowie Cobalt-, Eisen-, Kupfer- und Ruthenium-Aminkomplexe sind als Bleichkatalysatoren verwendbar.

Als Komponente (f) können die genannten Spülmittelzusammensetzungen 0 bis 8 Gew.% Enzyme enthalten. Falls die Spülmittelzusammensetzungen Enzyme enthalten, enthalten sie diese bevorzugt in Mengen von 0,1 bis 8 Gew.%. Dem Spülmittel können Enzyme zugesetzt werden, um die Reinigungsleistung zu steigern oder unter milderen Bedingungen (z.B. bei niedrigen Temperaturen) die Reinigungsleistung in gleicher Qualität zu gewährleisten. Eingesetzt werden können die Enzyme in freier oder auf einem Träger chemisch oder physikalisch immobilisierter Form oder in verkapselter Form. Zu den am häufigsten verwendeten Enzymen gehören in diesem Zusammenhang Lipasen, Amylasen, Cellulasen und Proteasen. Weiterhin können beispielsweise auch Esterasen, Pectinasen, Lactasen und Peroxidasen eingesetzt werden. Bevorzugt werden Amylasen und Proteasen eingesetzt.

Als Zusatzstoffe (g) können im Zusammenhang mit den genannten

Spülmittelzusammensetzungen beispielsweise anionische oder zwitterionische Tenside, Alkaliträger, polymere Dispergiermittel, Korrosionsinhibitoren, Entschäumer, Farbstoffe, Duftstoffe, Füllstoffe, Tablettensprengmittel, organische Lösungsmittel,

Tablettierhilfsmittel, Disintegrationsmittel, Verdicker, Löslichkeitsvermittler, oder Wasser eingesetzt werden. Als Alkaliträger können beispielsweise neben den bereits bei den Buildersubstanzen genannten Ammonium- oder Alkalimetallcarbonaten, Ammonium- oder Alkalimetallhydrogencarbonaten und Ammonium- oder Alkalimetallsesquicarbonaten auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können unter anderem Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.

Zur Verhinderung von Glaskorrosion, welche sich durch Trübungen, Irisieren, Schlieren und Linien auf den Gläsern bemerkbar macht, werden bevorzugt Glaskorrosionsinhibitoren eingesetzt. Bevorzugte Glaskorrosionsinhibitoren sind beispielsweise Magnesium- Zink und Bismuth-Salze und Komplexe.

Paraffinöle und Silikonöle können optional als Entschäumer und zum Schutz von Kunststoff- und Metalloberflächen eingesetzt werden. Entschäumer werden bevorzugt in Anteilen von 0,001 Gew% bis 5 Gew% eingesetzt. Außerdem können Farbstoffe wie beispielsweise Patentblau, Konservierungsmittel wie beispielsweise Kathon CG, Parfüme und sonstige Duftstoffe der Reinigungsformulierung zugesetzt werden.

Ein geeigneter Füllstoff im Zusammenhang mit den genannten Spülmittelzusammensetzungen ist beispielsweise Natriumsulfat.

Als weitere mögliche Zusatzstoffe im Zusammenhang mit den genannten Formulierungen sind amphotere und kationische Polymere zu nennen.

In einer Möglichkeit ist die genannte Spülmittelzusammensetzung phosphatfrei. Unter dem Begriff "phosphatfrei" sind in diesem Zusammenhang auch solche Spülmittelzusammensetzungen umfasst, welche im Wesentlichen kein Phosphat, d.h. Phosphat in technisch unwirksamen Mengen enthalten. Dies umfasst insbesondere Zusammensetzungen mit weniger als 1,0 Gew%, bevorzugt weniger als 0,5 Gew% Phosphat bezogen auf die Gesamtzusammensetzung.

Die Verwendung der nach dem erfindungsgemäßen herstellbaren bzw. hergestellten Polyasparaginsäure bzw. dieser umfassenden Zusammensetzungen als Zusatzstoff in Spülmitteln, insbesondere in Spülmitteln für maschinelles Geschirrspülen (ADW) ist möglich.

Weiterhin wird die Verwendung der erfindungsgemäß herstellbaren Polyasparaginsäuren als Waschkraftverstärker, Vergrauungsinhibitor und Inkrustationsinihibitor in Wasch- und Reinigungsmittelzusammensetzungen (z.B. als Additive für Wasch- und Reinigungsmittel von Textilien, Waschhilfsmittel, Wäschenachbehandlungsmittel) ermöglicht.

Weiterhin ermöglicht sind Reinigungs- und Waschmittelzusammensetzungen, welche die erfindungsgemäß herstellbaren Polyasparaginsäuren umfassen. Die Wasch- und Reinigungsmittelzusammensetzungen, in denen die erfindungsgemäß herstellbaren oder hergestellten Polyasparaginsäuren eingesetzt werden können, können pulver-, granulat-, tabletten-, pasten-, gelförmig oder flüssig sein. Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, und Bügelhilfen. Sie enthalten mindestens 0,1 Gew%, bevorzugt zwischen 0,1 und 10 Gew% und besonders bevorzugt 0,2 bis 5 Gew% der erfindungsgemäß herstellbaren Polyasparaginsäuren. Die Zusammensetzungen sind je nach ihrer vorgesehenen Anwendung in ihrer Zusammensetzung der Art der zu waschenden Textilien oder der zu reinigenden Oberflächen anzupassen. Sie enthalten konventionelle Wasch- und Reinigungsmittelinhaltsstoffe, wie sie dem Stand der Technik entsprechen. Repräsentative Beispiele für solche Wasch- und Reinigungsmittelinhaltsstoffe und - zusammensetzungen werden im Folgenden beschrieben.

Weiter Möglichkeiten sind flüssige oder gelförmige Wasch- und Reinigungsmittelzusammensetzungen, enthaltend

($A_I$) 0,1 bis 20 Gew% mindestens einer hier beschriebenen und erfindungsgemäß herstellbaren Polyasparaginsäure,
($B_I$) 1 bis 80 Gew% Tenside,
($C_I$) 0,1 bis 50 Gew% Builder, Cobuilder und/oder Komplexbildner,
($D_I$) 0 bis 20 Gew% Bleichsystem,
($E_I$) 0,1 bis 60 Gew% Wasch- oder Reinigungsmittelinhaltsstoffe, d.h. andere übliche Inhaltsstoffe wie Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine, und
($F_I$) 0 bis 98,7 Gew% Wasser.

Die Summe ($A_I$) bis ($F_I$) beträgt 100 Gew%.

Die Mengenverhältnisse der einzelnen Komponenten werden vom Fachmann abhängig vom jeweiligen Einsatzgebiet der flüssigen und gelförmigen Wasch- und Reinigungsmittelzusammensetzung eingestellt.

Weitere Möglichkeiten sind feste Wasch- und Reinigungsmittelzusammensetzungen, enthaltend

($A_F$) 0,1 bis 20 Gew% mindestens einer hier beschriebenen und erfindungsgemäß herstellbaren Polyasparaginsäure,
($B_F$) 1 bis 50 Gew% Tenside,
($C_F$) 0,1 bis 70 Gew% Builder, Cobuilder und/oder Komplexbildner,
($D_F$) 0 bis 30 Gew% Bleichsystem, und
($E_F$) 0,1 bis 70 Gew% Wasch- oder Reinigungsmittelinhaltsstoffe, d.h. andere übliche Inhaltsstoffe wie Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser.

Die Summe der Komponenten aus ($A_F$) bis ($E_F$) ergibt 100 Gew%.

Die festen Wasch- und Reinigungsmittelzusammensetzungen können beispielsweise in Pulver-, Granulat-, Extrudat- oder Tablettenform vorliegen.

Die Mengenverhältnisse der einzelnen Komponenten werden vom Fachmann abhängig vom jeweiligen Einsatzgebiet der festen Wasch- und Reinigungsmittelzusammensetzung eingestellt.

Als Tenside ($B_L$ oder $B_F$) können im Rahmen der hier genannten Formulierungen beispielsweise nichtionische Tenside (Niotenside, NIS) eingesetzt werden. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise $C_{12}$-$C_{14}$-Alkohole mit 3 EO, 5 EO, 7 EO oder 9 EO, $C_9$-$C_{11}$-Alkohol mit 7 EO, $C_{13}$-$C_{15}$-Alkohole mit 3 EO, 5 EO, 7 EO oder 9 EO, $C_{12}$-$C_{18}$-Alkohole mit 3 EO, 5 EO, 7 EO oder 9 EO und Mischungen aus diesen, wie Mischungen aus $C_{12}$-$C_{14}$-Alkohol mit 3 EO und $C_{12}$-$C_{18}$-Alkohol mit 7 EO, 2 Propylheptanol mit 3 bis 9 EO. Mischungen aus kurkettigen Alkoholethoxilaten (z. B. 2-Propylheptanol x 7 EO) und langkettigen Alkoholethoxilaten (z. B. C16,18 × 7 EO). Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die Ethylenoxid (EO)- und Propylenoxid (PO)-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside für die hier genannten Formulierungen auch Alkylglykoside der allgemeinen Formel (V)

$$R^{10}O(G)_i \qquad (V)$$

eingesetzt werden, worin $R^{10}$ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad i, der die Verteilung von Monoglykosiden und Oligoglykosiden angibt, ist eine beliebige Zahl zwischen 1 und 10; vorzugsweise liegt i bei 1,2 bis 1,4.

Eine weitere Klasse im Rahmen der für die hier genannten Formulierungen bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können in diesem Zusammenhang geeignet sein. Die Menge (das Gewicht) dieser nichtionischen Tenside beträgt vorzugsweise nicht mehr als die der ethoxylierten Fettalkohole, insbesondere nicht mehr als die Hälfte davon.

Weitere geeignete Tenside ($B_L$ oder $B_F$) sind Polyhydroxyfettsäureamide der Formel (VI)

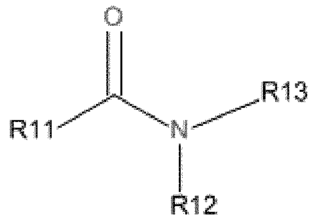

(VI),

worin R11C(=O) für einen aliphatischen Acylrest mit 6 bis 22 Kohlenstoffatomen, R12 für Wasserstoff, einen Alkyl- oder Hydroxyalkylrest mit 1 bis 4 Kohlenstoffatomen und R13 für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören in diesem Zusammenhang auch Verbindungen der Formel (VII)

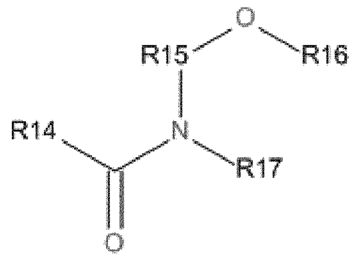

(VII),

worin R14 für einen linearen oder verzweigten Alkyl- oder Alkenylrest mit 7 bis 12 Kohlenstoffatomen, R15 für einen linearen, verzweigten oder cyclischen Alkylenrest mit 2 bis 8 Kohlenstoffatomen oder einen Arylenrest mit 6 bis 8 Kohlenstoffatomen, und R16 für einen linearen, verzweigten oder cyclischen Alkylrest oder einen Arylrest oder einen Oxy-Alkylrest mit 1 bis 8 Kohlenstoffatomen steht, wobei $C_1$-$C_4$-Alkyl- oder Phenylreste bevorzugt sind, und R17 für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. R17 wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielsweise gemäß WO 95/07331 durch Umsetzung mit Fettsäuremethylestern in Gegenwart eines Alkoxids als Katalysator in die gewünschten Polyhydroxyfettsäureamide überführt werden.

Tenside ($B_L$ oder $B_F$) können für die hier genannten Formulierungen auch anionische Tenside (Aniontenside) sein. Als anionische Tenside können im Rahmen der hier genannten Formulierungen beispielsweise solche vom Typ der Sulfonate und Sulfate eingesetzt. Als Tenside vom Sulfonat-Typ kommen dabei vorzugsweise $C_9$-$C_{13}$-Alkylbenzolsulfonate, Olefinsulfonate, d.h. Gemische aus Alken- und Hydroxyalkansulfonaten sowie Disulfonaten, wie man sie beispielsweise aus $C_{12}$-$C_{18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus $C_{12}$-$C_{18}$-Alkanen beispielsweise durch Sulfochlorierung oder Sulfoxidation mit anschließender Hydrolyse bzw. Neutralisation gewonnen werden. Ebenso sind auch die Ester von $\alpha$-Sulfofettsäuren (Estersulfonate), zum Beispiel die $\alpha$-sulfonierten Methylester der hydrierten Kokos-, Palmkern- oder Talgfettsäuren geeignet. Weitere geeignete Aniontenside können sulfierte Fettsäureglycerinester sein. Unter Fettsäureglycerinestern sind unter anderem die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden hierbei die Alkali- und insbesondere die Natriumsalze der Schwefelsäurehalbester der $C_{12}$-$C_{18}$-Fettalkohole, beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten

Verbindungen auf der Basis von fettchemischen Rohstoffen. Aus waschtechnischem Interesse sind die $C_{12}$-$C_{16}$-Alkylsulfate und $C_{12}$-$C_{15}$-Alkylsulfate sowie $C_{14}$-$C_{15}$-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside. Auch die Schwefelsäuremonoester der mit 1 bis 6 Mol Ethylenoxid ethoxylierten geradkettigen oder verzweigten $C_7$-$C_{21}$-Alkohole, wie 2-Methylverzweigte $C_9$-$C_{11}$-Alkohole mit im Durchschnitt 3,5 Mol Ethylenoxid (EO) oder $C_{12}$-$C_{18}$-Fettalkohole mit 1 bis 4 EO, sind unter anderem geeignet. Sie werden üblicherweise in Reinigungsmitteln aufgrund ihres hohen Schaumverhaltens nur in relativ geringen Mengen, beispielsweise in Mengen von 1 bis 5 Gew%, eingesetzt. Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten $C_8$-$C_{18}$-Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Die Tenside ($B_L$ oder $B_F$) können im Zusammenhang der hier genannten Formulierungen auch kationische Tenside sein. Als besonders geeignete kationische Tenside seien hierbei beispielsweise genannt:

- $C_7$-$C_{25}$-Alkylamine;
- N,N-Dimethyl-N-(hydroxy-$C_7$-$C_{25}$-alkyl)ammoniumsalze;
- mit Alkylierungsmitteln quaternisierte Mono- und Di-($C_7$-$C_{25}$-alkyl)dimethylammoniumverbindungen;
- Esterquats, insbesondere quaternäre veresterte Mono-, Di- und Trialkanolamine, die mit $C_8$-$C_{22}$-Carbonsäuren verestert sind;
- Imidazolinquats, insbesondere 1-Alkylimidazoliniumsalze der Formeln VIII oder IX

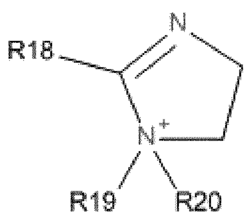

(VIII)

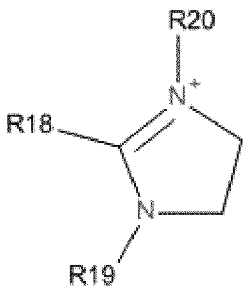

(IX),

wobei die Variablen folgende Bedeutung haben:

R18 $C_1$-$C_{25}$-Alkyl oder $C_2$-$C_{25}$-Alkenyl;
R19 $C_1$-$C_4$-Alkyl oder Hydroxy-$C_1$-$C_4$-alkyl;
R20 $C_1$-$C_4$-Alkyl, Hydroxy-$C_1$-$C_4$-alkyl oder ein Rest $R_1$-(CO)-$R^{21}$-$(CH_2)_j$- ($R^{21}$:-O- oder -NH-; j: 2 oder 3),

wobei mindestens ein Rest R18 ein $C_7$-$C_{22}$-Alkyl ist.

Die Tenside ($B_L$ oder $B_F$) können im Zusammenhang der hier genannten Formulierungen auch amphotere Tenside sein. Geeignete amphotere Tenside sind hierbei z.B. Alkylbetaine, Alkylamidbetaine, Aminopropionate, Aminoglycinate und amphotere Imidazoliumverbindungen.

Der Gehalt an Tensiden in flüssigen und gelförmigen Wasch- und Reinigungsmittelzusammensetzungen beträgt vorzugsweise 2 bis 75 Gew% und insbesondere 5 bis 65 Gew%, jeweils bezogen auf die gesamte Zusammensetzung.

Der Gehalt an Tensiden in festen Wasch- und Reinigungsmittelzusammensetzungen beträgt vorzugsweise 2 bis 40 Gew% und insbesondere 5 bis 35 Gew%, jeweils bezogen auf die gesamte Zusammensetzung.

Als Builder, Cobuilder und/oder Komplexbildner ($C_L$ oder $C_F$) eignen sich für die hier genannten Formulierungen unter anderem anorganische Builder wie:

- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist;
- Kristalline Silikate, wie insbesondere Disilikate und Schichtsilikate, z.B. $\delta$- und $\beta$-$Na_2Si_2O_5$. Die Silikate können in Form ihrer Alkalimetall-, Erdalkalimetall- oder Ammoniumsalze eingesetzt werden, bevorzugt sind die Na-, Li- und Mg-Silikate;
- Amorphe Silikate, wie Natriummetasilikat und amorphes Disilikat;
- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat; sowie
- Polyphosphate, wie Pentanatriumtriphosphat.

Als Cobuilder und Komplexbildner ($C_L$ oder $C_F$) eignen sich für die hier genannten Formulierungen unter anderem:

- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, $\beta$-Alanindiessigsäure, Ethylendiamintetraessigsäure, Serindiessigsäure, Isoserindiessigsäure, N-(2-Hydroxyethyl)-iminoessigsäure, Ethylendiamindibernsteinsäure, Glutaminsäurediessigsäure und Methyl- und Ethylglycindiessigsäure oder deren Alkalimetallsalze; . Besonders bevorzugte Komplexbildner sind Methylglycindiessigsäure und deren Salze, insbesondere deren Mono-, Di- und Tri-Natrium- , Kalium- , Lithium- und Ammoniumsalze. Die Salze der Methylglycindiessigsäure können als Racemat vorliegen, d.h. D- und L-Enantiomere liegen in äquimolarer Mischung vor oder ein Enantiomer, z.B. das L-Enantiomer, kann im Überschuss vorliegen.
- Oligomere und polymere Carbonsäuren, wie Homopolymere von Acrylsäure, Copolymere der Acrylsäure mit Sulfonsäuregruppen haltigen Comonomeren wie 2-Acrylamido-2-methylpropansulfonsäure (AMPS), Allylsulfonsäure und Vinylsulfonsäure, Oligomaleinsäuren, Copolymere der Maleinsäure mit Acrylsäure, Methacrylsäure oder $C_2$-$C_{22}$-Olefinen, z.B. Isobuten oder langkettigen $\alpha$-Olefinen, Vinyl-$C_1$-$C_8$-alkylether, Vinylacetat, Vinylpropionat, (Meth)Acrylsäureester von $C_1$-$C_8$-Alkoholen und Styrol. Bevorzugt sind die Homopolymere der Acrylsäure und Copolymere von Acrylsäure mit Maleinsäure oder AMPS. Die oligomeren und polymeren Carbonsäuren werden in Säureform oder als Natriumsalz eingesetzt;
- Phosphonsäuren wie z.B. 1-Hydroxyethylen(1,1-diphosphonsäure), Aminotri(methylenphosphonsäure), Ethylendiamintetra(methylenphosphonsäure) und Diethylentriaminpenta(methylenphosphonsäure) und deren Alkalimetallsalze.

Als Bleichmittel ($D_L$ oder $D_F$) kommen für die hier genannten Formulierungen unter anderem in Betracht: Natriumperborattetrahydrat, Natriumperboratmono-hydrat, Natriumpercarbonat, Peroxypyrophosphate, Citratperhydrate sowie persaure Salze oder Persäuren, wie Perbenzoate, Peroxophthalate, Diperazelainsäure, Phthaloiminopersäure oder Diperdodecandisäure. Um beim Waschen bei Temperaturen von 60° C und darunter eine verbesserte Bleichwirkung zu erreichen, können Bleichaktivatoren in die Wasch- oder Reinigungsmittel eingearbeitet werden. Als Bleichaktivatoren können bspw. Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind unter anderem Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU)1 N-Acylimide, insbesondere N-Nonanoylsuccinimid (NOSI), acylierte Phenolsulfonate, insbesondere n-Nonanoyloder Isononanoyloxybenzolsulfonat (nbzw. iso-NOBS), Carbonsäureanhydride, insbsondere Phthalsäureanhydrid, acylierte mehrwertige Alkohole, insbesondere Triacetin, Ethylenglykoldiacetat und 2,5-Diacetoxy-2,5-dihydrofuran. Zusätzlich zu den konventionellen Bleichaktivatoren oder an deren Stelle können als Bestandteile ($D_L$) auch sogenannte Bleichkatalysatoren in die flüssigen Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Aminkomplexe sind als Bleichkatalysatoren verwendbar.

Übliche Inhaltsstoffe für Reinigungs- oder Waschmittelzusammensetzungen ($E_L$ oder $E_F$) sind dem Fachmann bekannt und umfassen beispielsweise Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine für flüssige oder gelartige Reinigungs- oder Waschmittelzusammensetzungen ($E_L$), oder Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser für feste Reinigungs- oder Waschmittelzusammensetzungen ($E_F$).

Als Enzyme ($E_L$ oder $E_F$) kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie *Bacillus subtilis*, *Bacillus licheniformis*, *Streptomyceus griseus* und *Humicola insolens* gewonnene enzymatische Wirkstoffe. Vorzugsweise werden Proteasen vom Subtilisin-Typ und insbesondere Proteasen, die aus *Bacillus lentus* gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen können hierbei eingesetzt werden. Zu den geeigneten Amylasen zählen insbesondere $\alpha$-Amylasen, Iso-Amylasen, Pullulanasen und Pektinasen. Als Cellulasen werden vorzugsweise Cellobiohydrolasen, Endoglucanasen und $\beta$-Glucosidasen, die auch Cellobiasen genannt werden, bzw. Mischungen aus diesen eingesetzt. Da sich verschiedene Cellulase-Typen durch ihre CMCase und Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,12 bis etwa 2,5 Gew.-% betragen, jeweils bezogen auf die Gesamtformulierung.

Geeignete Vergrauungsinhibitoren ($E_L$ oder $E_F$) sind beispielsweise Carboxymethylcellulose, Pfropfpolymere von Vinylacetat auf Polyethylenglykol, und Alkoxylate des Polyethylenimins. Als Verdicker ($E_L$) können sogenannte Assoziativverdicker verwendet werden. Geeignete Beispiele für Verdicker sind dem Fachmann bekannt unter anderem in WO 2009/019225 A2, EP 013 836 oder WO 2006/016035 beschrieben.

Optische Aufheller (sogenannte "Weißtöner") ($E_L$ oder $E_F$) können den flüssigen Wasch-oder Reinigungsmitteln im Rahmen der hier genannten Formulierungen zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3- Diarylpyrazoline, Naphthalsäureimide, Benzoxazol-, Benzisoxazol-und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Als Farbübertragungsinhibitoren ($E_L$ oder $E_F$) geeignet sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und

Copolymere des 4-Vinylpyridins eignen sich als Farbübertragungsinhibitoren.

Waschmittelinhaltsstoffe sind im Übrigen allgemein bekannt. Detaillierte Beschreibungen sind z. B. in den WO 99/06524 und WO 99/04313; in Liquid Detergents, Editor: Kuo-Yann Lai, Surfactant Sci. Ser., Vol. 67, Marcel Decker, New York, 1997, p. 272-304, zu finden. Weitere detaillierte Beschreibungen der Wasch- und Reinigungsmittelinhaltsstoffe finden sich bspw. in: Handbook of Detergents, Part D: Formulation, Surfactant Sci Ser, Vol. 128, Editor: Michael S. Showell, CRC Press 2006; Liquid Detergents sec. Edition, Surfactant Sci Ser, Vol. 129, Editor: Kuo-Yann Lai, CRC Press 2006; oder Waschmittel: Chemie, Umwelt, Nachhaltigkeit, Günter Wagner, Wiley-VCH Verlag GmbH & Co. KGaA, August 2010.

Wie im Zusammenhang mit der vorliegenden Erfindung gefunden wurde, ist die nach dem hier beschriebenen erfindungsgemäßen Verfahren herstellbare bzw. hergestellte Polyasparaginsäure sehr gut als Calziumcarbonatbelagsinhibitor geeignet. Die nach der vorliegenden Erfindung herstellbare bzw hergestellte Polyasparaginsäure kann daher auch Verwendung in Zusammensetzungen als Belagsinhibitor, bevorzugt als Calziumcarbonatbelagsinhibitor, finden.

Ebenso ist die Verwendung der erfindungsgemäß herstellbaren bzw hergestellten Polyasparaginsäuren oder deren Gemische als Belagsinhibitoren oder Dispergiermittel in wasserführenden Systemen ermöglicht. Wasserführende Systeme, in denen Polyasparaginsäuren, die nach dem erfindungsgemäßen Verfahren herstellbar sind, Verwendung finden können, sind prinzipiell alle Systeme, die permanent oder sporadisch in Kontakt mit Wasser wie Meerwasser, Brackwasser, Flusswasser, städtischen oder industriellen Abwässern oder industriellem Prozesswasser wie Kühlwasser in Kontakt kommen und in denen Belagsbildung auftreten kann.

Wasserführende Systeme, in denen die erfindungsgemäß herstellbaren bzw hergestellten Polymere verwendet werden können, sind insbesondere Meerwasserentsalzungsanlagen, Brackwasserentsalzungsanlagen, Kühlwassersysteme und Kesselspeisewassersysteme, Dampfkessel, Erhitzer, Durchlauferhitzer, Heißwasserspeicher, Kühltürme, Kühlwasserkreisläufe und sonstige industrielle Prozesswässer. Die Entsalzungsanlagen können thermischer Natur sein oder auf Membranverfahren wie Umkehrosmose oder Elektrodialyse beruhen.

Im Allgemeinen werden die erfindungsgemäß herstellbaren bzw hergestellten Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäß herstellbaren Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylen-phosphonsäure) (DTPMP) und Ethylendiamintetra(methylenphophonsäure) (EDTMP), die jeweils in Säureform oder in Form ihrer Natriumsalze verwendet werden.

Die folgenden Beispiele dienen der Illustration der vorliegenden Erfindung und dürfen nicht als Beschränkung darauf verstanden werden.

## Beispiele

### Vergleichsbeispiel 1: Polykondensation von L-Asparaginsäure in Gegenwart von 5 mol% Methansulfonsäure im Glasreaktor

In einem 2 l fassenden Glasreaktor mit Rührer und Temperaturmessfühler wurden 133,1 g L-Asparaginsäure, 30 g Wasser und 4,81 g Methansulfonsäure (100%ig) vorgelegt. Die Reaktionsmischung wurde bei leichtem Stickstoffstrom unter Rühren auf die Kondensationstemperatur von 210° C bis 220° C unter gleichzeitiger Abdestillation von Wasser erhitzt. Nach 15 min entstand ein sehr viskoser Teig, welcher nicht mehr gerührt werden konnte. Innerhalb von weiteren 15 min erstarrte das Reaktionsprodukt zu einer festen Masse. Der Reaktor wurde auf Raumtemperatur abgekühlt. Die verbackene Reaktionsmasse wurde mit einem Spatel aus dem Reaktor herausgeholt und mit einem Mörser und Pistill zu einem Pulver zerkleinert. Die zerkleinerte Reaktionsmischung wurde wieder in den Reaktor gegeben bei leichtem Stickstoffstrom unter Rühren auf die Kondensationstemperatur von 210 ° C bis 220° C erhitzt und für weitere 5,5 Stunden unter gleichzeitiger Abdestillation von Wasser bei dieser Temperatur polykondensiert. Um die wässrige Natriumsalzlösung der Polyasparaginsäure herzustellen, dispergierte man 100 g des abgekühlten Reaktionsproduktes in 100 g Wasser, erwärmte die Mischung auf 70° C und fügte bei dieser Temperatur so viel einer 50%igen wässrigen Natronlauge zu, so dass der pH- Wert im Bereich 7 bis 9 lag. Dabei löste sich das in Wasser dispergierte Pulver allmählich auf und man erhielt eine klare wässrige Natriumsalzlösung der Polyasparaginsäure. Das gewichtsmittlere Molekulargewicht Mw betrug 7700 g/mol.

**Vergleichsbeispiel 2: Polykondensation von L-Asparaginsäure in Gegenwart 5 mol% Methansulfonsäure in einem 0,7 L LIST Discotherm B Reaktor**

In einen 0,7 l LIST Discotherm B Reaktor wurden 266,2 g L-Asparaginsäure, 60 g Wasser und 9,62 g Methansulfonsäure vorgelegt. Der Reaktorinhalt wurde bei leichtem Stickstoffstrom unter Rühren mit 20 Umdrehungen pro Minute auf die Kondensationstemperatur von 230° C unter gleichzeitiger Abdestillation von Wasser erhitzt. Nach 15 min entstand ein sehr viskoser, klebriger Teig und es wurde ein hoher Drehmomentanstieg beobachtet. Nach weiteren 15 min erstarrte das Reaktionsprodukt zu einer festen Masse und es kam schließlich zum Stillstand der Rührwelle. Nach Abkühlen auf Raumtemperatur, wurde das verbackene Reaktionsgemisch mit Hilfe eines Spatels aus dem Reaktor herausgeholt und mit einem Mörser und Pistill zu einem Pulver zerkleinert. Die zerkleinerte Reaktionsmischung wurde wieder in den Reaktor gegeben bei leichtem Stickstoffstrom unter Rühren auf die Kondensationstemperatur von 230° C erhitzt und für weitere 5,5 Stunden unter gleichzeitiger Abdestillation von Wasser bei dieser Temperatur polykondensiert. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7700 g/mol.

**Beispiel 1: Erhitzen von L-Asparaginsäure in Gegenwart von 5 mol% Methansulfonsäure unter Rückflusskühlung in einem Glasreaktor**

In einem 2 l fassenden Glasreaktor mit Rührer und Temperaturmessfühler wurden 266,2 g L-Asparaginsäure, 10 g Wasser und 13,7 g Methansulfonsäure (70%ig in Wasser) vorgelegt. Der Reaktorinhalt wurde unter Rühren mit 20 Umdrehungen bei einer Temperatur von 170 bis 180° C unter Rückflusskühlung erhitzt. Nach 30 min, 90 min, 120 und 180 min wurde jeweils eine Probe entnommen und der Umsetzungsgrad von L-Asparaginsäure bestimmt (Messung wie unten beschrieben):

Der Umsetzungsgrad von L-Asparaginsäure nach 30 min betrug 2,0%.
Der Umsetzungsgrad von L-Asparaginsäure nach 90 min betrug 5,2%.
Der Umsetzungsgrad von L-Asparaginsäure nach 120 min betrug 9,5%.
Der Umsetzungsgrad von L-Asparaginsäure nach 180 min betrug 8,5%.

**Beispiel A: Polykondensation von L-Asparaginsäure in Gegenwart 5 mol% Methansulfonsäure unter Rückflusskühlung in einem 0,7 L LIST Discotherm B Reaktor**

In einen 0,7 l LIST Discotherm B Reaktor wurden 266,2 g L-Asparaginsäure, 10 g Wasser und 13,7 g Methansulfonsäure (70%ig in Wasser) vorgelegt. Der Reaktorinhalt wurde unter Rühren mit 20 Umdrehungen pro Minute für 2 h bei einer Temperatur von 170 bis 180° C unter Rückflusskühlung erhitzt. Der Umsetzungsgrad von L-Asparaginsäure nach diesem Schritt betrug 9,5% (Messung wie unten beschrieben). Anschließend wurde das Reaktionsgemisch bei leichtem Stickstoffstrom unter Rühren auf die Kondensationstemperatur von 210° C bis 220° C erhitzt und für 5 h unter gleichzeitiger Abdestillation von Wasser bei dieser Temperatur polykondensiert. Es kam nicht zu einer Verbackung des Reaktonsgemisches und damit auch nicht zu einem Stillstand der Apparatur. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7680 g/mol.

**Beispiel B: Polykondensation von L-Asparaginsäure in Gegenwart 5 mol% Methansulfonsäure unter Rückflusskühlung in einem 0,7 L LIST Discotherm B Reaktor**

In einen 0,7 l LIST Discotherm B Reaktor wurden 266,2 g L-Asparaginsäure, 20 g Wasser und 13,7 g Methansulfonsäure (70%ig in Wasser) vorgelegt. Der Reaktorinhalt wurde unter Rühren mit 20 Umdrehungen pro Minute für 1 h bei einer Temperatur von 170 bis 180° C unter Rückflusskühlung erhitzt. Der Umsetzungsgrad von L-Asparaginsäure nach diesem Schritt betrug 2,0% (Messung wie unten beschrieben). Anschließend wurde das Reaktionsgemisch bei leichtem Stickstoffstrom unter Rühren auf die Kondensationstemperatur von 210° C bis 220° C erhitzt und für 5 h unter gleichzeitiger Abdestillation von Wasser bei dieser Temperatur polykondensiert. Es kam nicht zu einer Verbackung des Reaktonsgemisches und damit auch nicht zu einem Stillstand der Apparatur. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 7530 g/mol.

**Beispiel C: Polykondensation von L-Asparaginsäure in Gegenwart 8 mol% Phosphorsäure unter Rückflusskühlung in einem Glasreaktor**

In einem 2 l fassenden Glasreaktor mit Rührer und Temperaturmessfühler wurden 266,2 g L-Asparaginsäure, 10 g Wasser und 18,5 g Phosphorsäure (85%ig in Wasser) vorgelegt. Der Reaktorinhalt wurde unter Rühren mit 20 Umdrehungen pro Minute für 2 h bei einer Temperatur von 170 bis 180° C unter Rückflusskühlung erhitzt. Der Umsetzungsgrad von L-Asparaginsäure nach diesem Schritt betrug 3,7% (Messung wie unten beschrieben). Anschließend wurde das Reaktionsgemisch bei leichtem Stickstoffstrom unter Rühren auf die Kondensationstemperatur von 210° C bis 220° C erhitzt und für 4,5 h unter gleichzeitiger Abdestillation von Wasser bei dieser Temperatur polykondensiert. Es kam nicht zu einer Verbackung des Reaktonsgemisches und damit auch nicht zu einem Stillstand der Apparatur. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 9780 g/mol.

**Beispiel D: Polykondensation von L-Asparaginsäure in Gegenwart 5 mol% Methansulfonsäure unter Rückflusskühlung in einem Glasreaktor**

In einem 2 l fassenden Glasreaktor mit Rührer und Temperaturmessfühler wurden 266,2 g L-Asparaginsäure und 9,61 g Methansulfonsäure (100%ig) vorgelegt. Der Reaktorinhalt wurde unter Rühren mit 20 Umdrehungen pro Minute für 1,5 h bei einer Temperatur von 170 bis 180° C unter Rückflusskühlung erhitzt. Der Umsetzungsgrad von L-Asparaginsäure nach diesem Schritt betrug 5,2% (Messung wie unten beschrieben). Anschließend wurde das Reaktionsgemisch bei leichtem Stickstoffstrom unter Rühren auf die Kondensationstemperatur von 210° C bis 220° C erhitzt und für 6 h unter gleichzeitiger Abdestillation von Wasser bei dieser Temperatur polykondensiert. Es kam nicht zu einer Verbackung des Reaktonsgemisches und damit auch nicht zu einem Stillstand der Apparatur. Ein manuelles Zerkleinern mit Hilfe eines Spatels bzw. Mörsers war nicht notwendig. Die Hydrolyse des erhaltenen Endproduktes zur wässrigen Natriumsalzlösung der Polyasparaginsäure erfolgte wie in V1 beschrieben. Das gewichtsmittlere Molekulargewicht Mw betrug 8300 g/mol.

**Bestimmung des Molekulargewichts (Mw und Mn)**

Das gewichtsmittlere bzw. zahlenmittlere Molekulargewicht (Mw bzw. Mn) der Beispiele wurde mit Hilfe von GPC (Gel-Permeations-Chromatographie) unter folgenden Bedingungen bestimmt:

| | |
|---|---|
| Säule | PSS SUPREMA analytical linear M (Material: Polyhydroxymethacrylat Copolymer-Netzwerk Länge: 300 mm, Durchmesser 8 mm, Partikelgröße 10 $\mu$) |
| Elutionsmittel | 0,08 mol/l TRIS-Puffer pH = 7,0 in dest Wasser + 0,15 mol/l NaCl + 0,01 mol/l $NaN_3$ |
| Säulentemperatur | 35° C |
| Durchflußgeschwindigkeit | 0.8 mL/min |
| Injektion | 100 $\mu$L |
| Konzentration | 1,5 mg/mL |
| Detektor | DRI Agilent 1100UV GAT-LCD 503 (260nm) |

Für die Molekulargewichtsbestimmung wurde eine kleine Menge des nach dem Polykondensationsschritt entstandenen Polyaspartimids entnommen und mehrmals mit Wasser gewaschen, um so die eingesetzte Methansulfonsäure zu entfernen. Das gewaschene Pulver wurde dann wie beschrieben mit Natronlauge hydrolysiert (d.h. man dispergierte das gewaschene Pulver in Wasser, erwärmte die Mischung auf 70° C und fügte bei dieser Temperatur so viel einer 50%igen wässrigen Natronlauge zu, so dass der pH-Wert im Bereich 7-9 lag. Dabei löste sich das in Wasser dispergierte Pulver allmählich auf und man erhielt eine klare wässrige Natriumsalzlösung der Polyasparaginsäure). Probelösungen wurden über Sartorius Minisart RC 25 (0,2 $\mu$ m) filtriert. Die Kalibrierung erfolgte mit eng verteilten Na-PAA-Standards der Fa. Polymer Standard Service mit Molekulargewichten von M = 1.250 g/mol bis M = 130500 g/mol. Zusätzlich wurde Na-Acrylat mit einem Molekulargewicht von M = 96 und ein PEG-Standard mit M = 620, der mit Na-PAA M = 150 gleichgesetzt wurde, benutzt. Die Werte außerhalb dieses Elutionsbereiches wurden extrapoliert. Die Auswertegrenze lag bei 122 g/mol.

**Bestimmung des Umsetzungsgrades:**

Zur Bestimmung des Umsetzungsgrades U wurde der Anteil an nicht umgesetzter monomerer Asparaginsäure in der Reaktionsmischung nach Schritt (b) ermittelt. Hierzu wurden 100 mg des nach Schritt (b) erhaltenen Vorkondensats in ein 50 ml Ampullenglas eingewogen, mit 9,9 mL 1 N HCL versetzt und 3 Stunden bei 350 U/min gerührt. Danach wurde die Probe über einen Spartan 30 mm / 0.45 µm RC Spritzenfilter (GE Healthcare) filtriert und 1:10 (v/v) mit Wasser verdünnt. Mittels

Hochleistungsflüssigkeitschromatographie (HPLC) wurde der Asparaginsäuregehalt Y dieser verdünnten Lösung ermittelt gemäß

$$U = (X - Y) / X$$

wobei X der Asparaginsäuregehalt in 100 mg der Reaktionsmischung vor Beginn des Schrittes (b) ist.

**Beispielhaft für Beispiel 1:** Vor Beginn des Schrittes (b) enthielten 100 mg der Reaktionsmischung 91,8 mg (= X) Asparaginsäure.

Nach 30 min Erhitzen unter Rückfluss wurde ein Asparaginsäuregehalt von 90 mg (= Y) pro 100 mg Reaktionsmischung ermittelt. Der Umsetzungsgrad U betrug somit U = (91,8 mg - 90 mg) / 91,8 mg = 2,0%

Nach 90 min Erhitzen unter Rückfluss wurde ein Asparaginsäuregehalt von 87 mg (= Y) pro 100 mg Reaktionsmischung ermittelt. Der Umsetzungsgrad betrug somit U = (91,8 mg - 87 mg) / 91,8 mg = 5,2%.

Nach 120 min Erhitzen unter Rückfluss wurde ein Asparaginsäuregehalt von 83 mg (= Y) pro 100 mg Reaktionsmischung ermittelt. Der Umsetzungsgrad U betrug somit U = (91,8 mg - 83 mg) / 91,8 mg = 9,5 %

Nach 180 min Erhitzen unter Rückfluss wurde ein Asparaginsäuregehalt von 84 mg (= Y) pro 100 mg Reaktionsmischung ermittelt. Der Umsetzungsgrad U betrug somit U = (91,8 mg - 84 mg) / 91,8 mg = 8,5 %

| | |
|---|---|
| Apparatur | Agilent 1290 Infinity Serie mit Diode Array Detector |
| Trennsäule: | SIELC Primesep 100, 5µm 100 A (3,2 x 100 mm) |
| Temperatur | 25 ° C |
| Injektionsvolumen | 5 µL |
| Fluss | 1,0 mL / min |
| Detektion | 205 nm |
| Eluent | Eluent A: Wasser/Acetonitril 7/3 v/v<br>Eluent B: Wasser/Acetonitril/Phosphorsäure 700/300/5 v/v/v<br><br>Gradient: |

| Laufzeit (min) | 0 | 5 | 6 | 15 |
|---|---|---|---|---|
| Eluent A (vol%) | 95 | 87,5 | 100 | 100 |
| Eluent B (vol%) | 5 | 12,5 | 0 | 0 |

| | |
|---|---|
| Kalibrierung | Es wurden zwei Einwaagen der Referenzsubstanz L-Asparaginsäure (Merck Millipore) in 2 mL 1 M HCL gelöst und mit Wasser aufgefüllt. Die beiden Stammlösungen wurden weiter verdünnt, so dass 4 weitere Kalibrierlösungen entstanden sind. Die Konzentrationen der 6 hergestellten Kalibrierlösungen wurden so gewählt, dass der Gehalt der Probe innerhalb der Kalibrierlösungen liegt. |

## Patentansprüche

1. Verfahren zur Herstellung von Polyasparaginsäure, umfassend folgende Schritte:

   (a) Kontaktieren einer Mischung aus:

      (i) Asparaginsäure,
      (ii) 1 bis 25 mol% bezogen auf die eingesetzte Menge an Asparaginsäure in mol, eines sauren Katalysators, und
      (iii) Wasser

   in einem Reaktor;
   (b) Erhitzen der Mischung nach (a) unter Rückflusskühlung ohne Abdestillation von Wasser bei einer Reaktionstemperatur von 100 bis 220° C bis zu einem Umsetzungsgrad der Asparaginsäure von mindestens 1 %;
   (c) Polykondensation der Reaktionsmasse nach (b) unter gleichzeitiger Abdestillation von Wasser bei 170 bis 250° C;
   (d) Hydrolyse der Polykondensate nach (c) unter Zugabe einer Base; und
   (e) optional Ansäuern der in (d) erhaltenen Salze der Polyasparaginsäure.

2. Verfahren nach Anspruch 1, wobei 3 bis 15 mol% bezogen auf die eingesetzte Menge an Asparaginsäure in mol, des sauren Katalysators zugegeben wird.

3. Verfahren nach Anspruch 1 oder 2, wobei der saure Katalysator Methansulfonsäure ist.

4. Verfahren nach einem der Ansprüche 1 bis 3, wobei die Polykondensation bei 200 bis 250° C durchgeführt wird.

5. Verfahren nach einem der Ansprüche 1 bis 4, wobei die Base ausgewählt ist aus der Gruppe bestehend aus Natronlauge, Kalilauge, Calciumhydroxid, Bariumhydroxid, Soda, Kaliumcarbonat, Ammoniak, und Ammoniumhydroxid.

6. Verfahren nach einem der Ansprüche 1 bis 5, wobei die Ansäuerung durchgeführt wird mit einer Mineralsäure oder einem sauren Ionenaustauscher.

7. Verfahren nach einem der Ansprüche 1 bis 6, wobei in Schritt (b) der Umsetzungsgrad der Asparaginsäure mindestens 5 % beträgt.

8. Verfahren nach einem der Ansprüche 1 bis 7, wobei in Schritt (b) die Temperatur 160 bis 180° C beträgt.

## Claims

1. A method for producing polyaspartic acid, comprising the following steps:

   (a) contacting a mixture of:

      (i) aspartic acid,
      (ii) 1 to 25 mol%, based on the amount of aspartic acid used in moles, of an acidic catalyst, and
      (iii) water

   in a reactor;
   (b) heating the mixture according to (a) under reflux cooling without distillative removal of water at a reaction temperature of 100 to 220°C up to a degree of conversion of the aspartic acid of at least 1%;
   (c) polycondensing the reaction mixture according to (b) with simultaneous distillative removal of water at 170 to 250°C;
   (d) hydrolyzing the polycondensates according to (c) with addition of a base; and
   (e) optionally acidifying the salts of polyaspartic acid obtained in (d).

2. The method according to claim 1, wherein 3 to 15 mol%, based on the amount of aspartic acid used in moles, of

the acidic catalyst is added.

3. The method according to claim 1 or 2, wherein the acidic catalyst is methanesulfonic acid.

4. The method according to any of claims 1 to 3, wherein the polycondensation is carried out at 200 to 250°C.

5. The method according to any of claims 1 to 4, wherein the base is selected from the group consisting of aqueous sodium hydroxide solution, aqueous potassium hydroxide solution, calcium hydroxide, barium hydroxide, sodium carbonate, potassium carbonate, ammonia and ammonium hydroxide.

6. The method according to any of claims 1 to 5, wherein the acidification is carried out with a mineral acid or an acidic ion exchanger.

7. The method according to any of claims 1 to 6, wherein in step (b) the degree of conversion of the aspartic acid is at least 5%.

8. The method according to any of claims 1 to 7, wherein in step (b) the temperature is 160 to 180°C.

## Revendications

1. Procédé de préparation de poly(acide aspartique), comprenant les étapes suivantes :

   (a) mise en contact d'un mélange composé :

      (i) d'acide aspartique,
      (ii) de 1 à 25 % en moles, par rapport à la quantité utilisée d'acide aspartique en moles, d'un catalyseur acide, et
      (iii) d'eau

   dans un réacteur ;
   (b) chauffage du mélange selon (a) sous refroidissement à reflux sans distillation de l'eau à une température de réaction de 100 à 220 °C jusqu'à un degré de conversion de l'acide aspartique d'au moins 1 % ;
   (c) polycondensation de la masse de réaction selon (b) sous distillation simultanée d'eau à une température de 170 à 250 °C ;
   (d) hydrolyse des polycondensats selon (c) par ajout d'une base ; et
   (e) éventuellement, acidification des sels du poly(acide aspartique) obtenus en (b).

2. Procédé selon la revendication 1, 3 à 15 % en moles, par rapport à la quantité utilisée d'acide aspartique en moles, du catalyseur acide étant ajoutés.

3. Procédé selon la revendication 1 ou 2, le catalyseur acide étant l'acide méthanesulfonique.

4. Procédé selon l'une quelconque des revendications 1 à 3, la polycondensation étant mise en œuvre à une température de 200 à 250 °C.

5. Procédé selon l'une quelconque des revendications 1 à 4, la base étant choisie dans le groupe constitué par la soude caustique, la potasse caustique, l'hydroxyde de calcium, l'hydroxyde de baryum, la soude, le carbonate de potassium, l'ammoniac et l'hydroxyde d'ammonium.

6. Procédé selon l'une quelconque des revendications 1 à 5, l'acidification étant mise en œuvre avec un acide minéral ou un échangeur d'ions acides.

7. Procédé selon l'une quelconque des revendications 1 à 6, dans lequel dans l'étape (b) le degré de conversion de l'acide aspartique est d'au moins 5 %.

8. Procédé selon l'une quelconque des revendications 1 à 7, dans lequel dans l'étape (b) la température est de 160 à 180 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5457176 A
- DE 4023463 A1
- WO 15036344 A
- WO 15036325 A
- EP 747417 A
- US 5552517 A
- EP 851023 A
- DE 19819187 A
- US 5422028 A
- US 5294362 A
- US 5292447 A
- US 5039447 A
- JP 58217598 A
- WO 9013533 A
- WO 9507331 A
- US 3234258 A
- US 5075041 A
- WO 2009019225 A2
- EP 013836 A
- WO 2006016035 A
- WO 9906524 A
- WO 9904313 A


### In der Beschreibung aufgeführte Nicht-Patentliteratur


- Surfactant Sci. Ser. Liquid Detergents. Marcel Decker, 1997, vol. 67, 272-304
- Part D: Formulation, Surfactant Sci Ser. Handbook of Detergents. CRC Press, 2006, vol. 128
- Surfactant Sci Ser. Liquid Detergents. CRC Press, 2006, vol. 129
- **GÜNTER WAGNER.** Waschmittel: Chemie, Umwelt, Nachhaltigkeit. Wiley-VCH Verlag GmbH & Co. KGaA, August 2010